# EUROPÄISCHE PATENTSCHRIFT

(11) **EP 4 123 960 B1**
(45) Veröffentlichungstag und Bekanntmachung des Hinweises auf die Patenterteilung: **01.11.2023**
(21) Anmeldenummer: 22185607.3
(22) Anmeldetag: 19.07.2022
(51) Int. Cl.: H04L 9/08, H04L 9/32, G06Q 20/36, G07F 7/10

(54) **VERFAHREN UND VORRICHTUNG ZUM BEREITSTELLEN EINES EINEM GESCHÜTZTEN DATENOBJEKT ZUGEORDNETEN DIGITALEN NUTZERGEHEIMNISSES**
METHOD AND DEVICE FOR PROVIDING A DIGITAL USER SECRET ALLOCATED TO A PROTECTED DATA OBJECT
PROCÉDÉ ET DISPOSITIF DE FOURNITURE D'UN SECRET UTILISATEUR NUMÉRIQUE ASSOCIÉ À UN OBJET DE DONNÉES PROTÉGÉ

(30) Priorität: 20.07.2021 DE 102021118721
(43) Veröffentlichungstag der Anmeldung: 25.01.2023
(73) Patentinhaber: Bundesdruckerei GmbH, 10969 Berlin (DE)
(72) Erfinder: Moschny, Dr. Torsten, 14167 Berlin (DE); Weiß, Niklas, 12489 Berlin (DE)
(74) Vertreter: Bittner, Thomas L.

(56) Entgegenhaltungen:
- US-A1- 2003 135 731
- US-A1- 2004 025 028

## Beschreibung

Die Erfindung betrifft ein Verfahren und eine Vorrichtung zum Bereitstellen eines digitalen Nutzergeheimnisses, welches einem zugriffsgeschützten Datenobjekt zugeordnet ist.

### Hintergrund

Datenobjekte können geschützt werden, derart, dass ein Zugriff oder eine Verwendung auf das Datenobjekt nur bei Kenntnis eines Nutzergeheimnisses möglich ist. Auf diese Weise ist das Datenobjekt gegen unbefugte Nutzung oder Verwendung geschützt. Nutzergeheimnisse sind zum Beispiel in Form persönlichen Identifizierungsnummer (PIN) und eines persönliches Schlüssels zum Entsperren (PUK - *Personal Unblocking Key)* als solche bekannt.

Beispielweise kann ein solcher Schutz im Zusammenhang mit digitalen Zertifikaten in einer Public-Key-Infrastruktur vorgesehen sein. Ein digitales Zertifikat ist ein digitaler Datensatz, der bestimmte Eigenschaften von Personen oder Objekten bestätigt und dessen Authentizität und Integrität durch kryptografische Verfahren geprüft werden kann. Das digitale Zertifikat enthält insbesondere die zu seiner Prüfung erforderlichen Daten. Die Ausstellung des Zertifikats erfolgt durch eine offizielle Zertifizierungsstelle, die Certification Authority (CA). Bekannt sind zum Beispiel Public-Key-Zertifikate, beispielweise nach dem Standard X.509, welche die Identität des Inhabers und weitere Eigenschaften betreffend eines zugehörigen öffentlichen kryptographischen Schlüssels bestätigen.

Ein Zertifikatsprodukt kann Folgendes aufweisen oder hieraus bestehen: (i) ein digitales Zertifikat mit u.a. dem darin enthaltenen öffentlichen Schlüssel und (ii) den zugehörigen privaten oder geheimen (nichtöffentlichen) Schlüssel, dessen (Freigabe und) Nutzung die Kenntnis des Nutzergeheimnisses erfordert. Die hierbei zugrundeliegende Public-Key-Kryptografie stellt Verfahren zur Verfügung, die Schlüsselpaare dergestalt zu erzeugen und zu verwenden, dass dem öffentlichen Schlüssel aus dem digitalen Zertifikat des Zertifikatsprodukts stets genau ein privater Schlüssel zugeordnet ist. Das Nutzergeheimnis schützt die Verwendung des privaten Schlüssels des Zertifikatsprodukt.

Es ist bekannt, dem Nutzer das Nutzergeheimnis in Form von PIN oder PUK mittels Papierbrief mit Scratch-Off-Label zur Verfügung zu stellen. Dieser Weg ist fehlerträchtig, und der Verlust eines PIN / PUK-Briefs führt zu einer Neuproduktion von Chipkarte und PIN / PUK-Brief, was Zusatzaufwand und Kosten bedeutet.

Das Dokument US 7,231,371 B1 offenbart ein Verfahren zum Bestellen eines digitalen Zertifikats durch einen Nutzer und zum Liefern des Zertifikats an ein Zertifikats-Unterstützungs-Gerät des Nutzers. Eine aufgegebene Bestellung, in der persönliche Daten von dem Nutzer empfangen wurden und in der der Nutzer durch eine Registrierungseinheit authentifiziert wurde, wird in einer zuständigen Zertifizierungseinheit gespeichert. Eine der Bestellung zugeordnete geheime Zertifikats-PIN, die ansonsten nur der Zertifizierungseinheit bekannt ist, wird dem Nutzer übermittelt und ein Zertifikat oder eine Referenz auf ein Zertifikat wird zum Speichern an das durch eine Zertifikats-Unterstützungs-Identifizierung identifizierte Zertifikats-Unterstützungs-Gerät übermittelt, wenn die Zertifikats-PIN und Angaben, die eine Bestimmung der Bestellung ermöglichen, an die Zertifizierungseinheit übermittelt werden.

In dem Dokument JP 2004-178398 A ist ein PIN-Erzeugungs-Gerät beschrieben, welches mit Mitteln zum Erzeugen der PIN und zum Verschlüsseln der erzeugten PIN gemäß einer vorbestimmten Regel gebildet ist. Die verschlüsselte PIN wird in einem elektronischen Datenzustand an ein PIN-Speicher-System verteilt. Eine PIN-Verkaufseinheit wird mit Mitteln zum Speichern der von dem PIN-Erzeugungs-Gerät gesendeten verschlüsselten PIN, mit Mitteln zum Dekodieren der gespeicherten verschlüsselten PIN auf Basis einer PIN-Ausgabe-Anfrage eines Nutzers gemäß der vorbestimmten Regel und mit Mitteln zum Drucken der dekodierten PIN in ein PIN-Zertifikat bereitgestellt. US 2003/135731 A1 und US 2004/025028 A1 beschreiben Zertifikat-Generierungen für Smartcards.

### Zusammenfassung

Aufgabe der Erfindung ist es, ein Verfahren und eine Vorrichtung zum Bereitstellen eines einem geschützten Datenobjekt zugeordneten digitalen Nutzergeheimnisses azugeben, mit denen das digitale Nutzergeheimnis auf sichere und effiziente Weise für unterschiedliche Anwendungen bereitgestellt werden kann.

Zur Lösung sind ein Verfahren und eine Vorrichtung zum Bereitstellen eines einem geschützten Datenobjekt zugeordneten digitalen Nutzergeheimnisses nach den unabhängigen Ansprüchen 1 und 12 geschaffen. Ausgestaltungen sind Gegenstand von abhängigen Unteransprüchen.

Nach einem Aspekt ist ein Verfahren zum Bereitstellen eines einem geschützten Datenobjekt zugeordneten digitalen Nutzergeheimnisses geschaffen, bei dem Folgendes vorgesehen ist: Bereitstellen eines Datenobjekts, welches durch ein erstes Nutzergeheimnis geschützt wird; Erzeugen eines ersten digitalen Nutzergeheimnis-Datenobjekts für das erste Nutzergeheimnis, wobei das erste digitale Nutzergeheimnis-Datenobjekt erste Nutzergeheimnisdaten aufweist, die für das erste digitale Nutzergeheimnis-Datenobjekt einen ersten Nutzergeheimniswert, einen ersten Nutzergeheimnistyp sowie eine erste Nutzergeheimnisreferenz umfassen, welche eine Zuordnung zwischen dem Datenobjekt und dem ersten digitalen Nutzergeheimnis-Datenobjekt anzeigt; digitales Verschlüsseln des ersten digitalen Nutzergeheimnis-Datenobjekts; und Erzeugen einer dem Datenobjekt zugeordneten digitalen Datenstruktur, aufweisend (i) einen Nutzergeheimnis-Datencontainer, enthaltend das verschlüsselte erste digitale Nutzergeheimnis-Datenobjekt; (ii) Produktreferenzdaten, die eine Zuordnung zwischen dem Datenobjekt und dem Nutzergeheimnis-Datencontainer anzeigen; und (iii) Integritätsschutzdaten, die für zumindest den Nutzergeheimnis-Datencontainer und die Produktreferenzdaten bestimmt werden und anhand derer eine Datenintegrität des Nutzergeheimnis-Datencontainers nachprüfbar ist. Die digitale Datenstruktur wird in einer Datenspeichereinrichtung gespeichert.

Nach einem Aspekt ist eine Vorrichtung zum Bereitstellen eines einem geschützten Datenobjekt zugeordneten digitalen Nutzergeheimnisses mit einer Speichereinrichtung und einem oder mehreren Prozessoren geschaffen, die für Folgendes eingerichtet sind: Bereitstellen eines Datenobjekts, welches durch ein erstes Nutzergeheimnis geschützt wird; Erzeugen eines ersten digitalen Nutzergeheimnis-Datenobjekts für das erste Nutzergeheimnis, wobei das erste digitale Nutzergeheimnis-Datenobjekt erste Nutzergeheimnisdaten aufweist, die für das erste digitale Nutzergeheimnis-Datenobjekt einen ersten Nutzergeheimniswert, einen ersten Nutzergeheimnistyp sowie eine erste Nutzergeheimnisreferenz umfassen, welche eine Zuordnung zwischen dem Datenobjekt und dem ersten digitalen Nutzergeheimnis-Datenobjekt anzeigt; digitales Verschlüsseln des ersten digitalen Nutzergeheimnis-Datenobjekts; Erzeugen einer dem Datenobjekt zugeordneten digitalen Datenstruktur, aufweisend (i) einen Nutzergeheimnis-Datencontainer, enthaltend das verschlüsselte erste digitale Nutzergeheimnis-Datenobjekt; (ii) Produktreferenzdaten, die eine Zuordnung zwischen dem Datenobjekt und dem Nutzergeheimnis-Datencontainer anzeigen; und (iii) Integritätsschutzdaten, die zumindest für den Nutzergeheimnis-Datencontainer und die Produktreferenzdaten bestimmt werden und anhand derer eine Datenintegrität des Nutzergeheimnis-Datencontainers nachprüfbar ist; und Speichern der digitalen Datenstruktur in einer Datenspeichereinrichtung.

Mittels der vorgeschlagenen Technologie kann ein digitales Nutzergeheimnis, welches einem geschützten Datenobjekt zugeordnet ist, auf sichere und effiziente Art und Weise für unterschiedliche Anwendungen dem Nutzer bereitgestellt werden, wobei insbesondere auch die Datenintegrität des ursprünglich erzeugten Nutzergeheimnisses bis zur Bereitstellung an und Nutzung durch den Nutzer sichergestellt ist. Die Kenntnis des digitalen Nutzergeheimnis ist Voraussetzung, um auf das geschützte Datenobjekt zugreifen zu können, es also zu nutzen. Bei dem Datenobjekt kann es sich einen beliebigen Datensatz oder -struktur handeln, für den / die eine Nutzung oder Freigabe (Zugriff) nur bei Kenntnis des Nutzergeheimnisses ermöglicht sein soll.

Bei dem Verfahren kann das Bereitstellen des Datenobjekts ein Bereitstellen eines Zertifikatsprodukts mit einem digitalen Zertifikat vorsehen, welches einen öffentlichen Schlüssel aufweist, und mit einem dem öffentlichen Schlüssel im Rahmen einer Public-Key-Infrastruktur zugeordneten geheimen Schlüssel, wobei der geheime Schlüssel durch das erste Nutzergeheimnis geschützt wird. Nur bei Kenntnis des digitalen Geheimnisses kann der geheime Schlüssel genutzt oder verwendet werden.

Das Zertifikatprodukt wird von einem digitalen Zertifikat mit u.a. dem darin enthaltenen öffentlichen Schlüssel und dem zugehörigen privaten oder geheimen Schlüssel (Datenobjekt) gebildet, dessen (Freigabe und) Nutzung die Kenntnis des digitalen Nutzergeheimnisses erfordert. Mittels der zugrundeliegenden Public-Key-Kryptografie werden hier Schlüsselpaare dergestalt erzeugt und verwendet, dass dem öffentlichen Schlüssel aus dem digitalen Zertifikat des Zertifikatsprodukts genau ein geheimer Schlüssel zugeordnet ist. Das digitale Nutzergeheimnis schützt die Verwendung (Zugriff) des zugeordneten privaten Schlüssels des Zertifikatsprodukt.

Das Zertifikatsprodukt kann mit einem digitalen Schlüssel-Zertifikat bereitgestellt werden. Das digitalen Schlüssel-Zertifikat umfasst neben einem Signaturschlüssel eines asymmetrischen Verschlüsselungsverfahrens eine elektronische Bescheinigung darüber, dass der öffentliche Signaturprüfschlüssel und damit auch der zugehörige Signaturschlüssel einer bestimmten Person zugeordnet sind. Mit dem Signaturschlüssel kann in einer möglichen Anwendung zum Beispiel der sogenannte Hashwert (Prüfwert), der während der Erstellung der Signatur eines elektronischen Dokuments erstellt wurde, entschlüsselt werden. Indem dieser mit einem neu erstellten Hashwert verglichen wird, kann die Authentizität des elektronischen Dokuments geprüft werden.

Das erste digitale Nutzergeheimnis-Datenobjekt kann ein Nutzergeheimnis aus der folgenden Gruppe anzeigen: persönlicher Identifizierungscode, persönliche Identifizierungsnummer und persönlicher Schlüssel, zum Beispiel zum Entsperren, also zum Freigeben des geschützte Datenobjekts für eine Nutzung. Der persönliche Identifizierungscode kann zum Beispiel eine beliebige Folge alphanumerischer Zeichen umfassen. Dies kann wahlweise auch für die Identifizierungsnummer gelten. In einer Ausgestaltung handelt es sich bei dem digitalen Nutzergeheimnis um eine CAN ("*Card Access Number*"). Auch andere Schlüssel, die zum Beispiel als eine beliebige Byte-Folge ausgebildet sind, können als digitales Nutzergeheimnis zum Einsatz kommen.

Der Nutzergeheimnis-Datencontainer kann Ablaufdaten aufweisend erzeugt werden, die ein Ablaufkriterium für eine Gültigkeit des Nutzergeheimnis-Datencontainers und / oder des ersten digitalen Nutzergeheimnis-Datenobjekts anzeigen. Das Ablaufkriterium kann zumindest eines der folgenden Kriterien anzeigen: zugelassene Anzahl von Abrufen für Nutzergeheimnis-Datencontainer und / oder erstes digitales Nutzergeheimnis-Datenobjekt, zugelassener Nutzungszeitraum für Nutzergeheimnis-Datencontainer und / oder erstes digitales Nutzergeheimnis-Datenobjekt, Ablaufdatum für Nutzergeheimnis-Datencontainer und / oder erstes digitales Nutzergeheimnis-Datenobjekt, Ablaufzeitpunkt für das Zertifikatsprodukt und Zeitpunkt des Erzeugens der digitalen Datenstruktur.

Das erste digitale Nutzergeheimnis-Datenobjekt kann mit einem öffentlichen Schlüssel eines asymmetrischen Kryptosystems verschlüsselt werden. Alternativ oder ergänzend kann vorgesehen sein, das erste digitale Nutzergeheimnis-Datenobjekt mit dem geheimen Schlüssel des symmetrischen Kryptosystems, welcher dem öffentlichen Schlüssel zugeordnet ist, zu verschlüsseln.

Bei dem Verfahren kann weiterhin Folgendes vorgesehen sein: Erzeugen eines zweiten digitalen Nutzergeheimnis-Datenobjekts für ein zweites Nutzergeheimnis, wobei das zweite digitale Nutzergeheimnis-Datenobjekt mit zweiten Nutzergeheimnisdaten, die von den ersten Nutzergeheimnisdaten verschieden sind und für das zweite digitale Nutzergeheimnis-Datenobjekt einen zweiten Nutzergeheimniswert, einen zweiten Nutzergeheimnistyp sowie eine zweite Nutzergeheimnisreferenz umfassen, welche eine Zuordnung zwischen dem Datenobjekt und dem zweiten digitalen Nutzergeheimnis-Datenobjekt anzeigt; und digitales Verschlüsseln des zweiten digitalen Nutzergeheimnis-Datenobjekts; wobei die dem Datenobjekt zugeordnete digitale Datenstruktur mit einem Nutzergeheimnis-Datencontainer erzeugt wird, welcher das verschlüsselte erste und das verschlüsselte zweite digitale Nutzergeheimnis-Datenobjekt umfasst.

Die digitale Datenstruktur kann in einem geschützten Speicherbereich der Datenspeichereinrichtung gespeichert werden, bei dem ein Zugriff auf die digitale Datenstruktur mittels einer Benutzerauthentisierung beschränkt wird.

Die Integritätsschutzdaten können eine oder mehrere der folgenden für den Nutzergeheimnis-Datencontainer bestimmten Daten umfassen: digitale Signatur, Hash-Wert und Message Authentication Code wie Keyed-Hash Message Authentication Code oder Cipher-Based Message Authentication Code.

Die Integritätsschutzdaten können (weiterhin) über den Nutzergeheimnis-Datencontainer und die Ablaufdaten bestimmt werden. Beispielweise wird die digitale Signatur, der Hash-Wert oder der Message Authentication Code für die Daten des Nutzergeheimnis-Datencontainers und die Ablaufdaten sowie wahlweise die Produktreferenzdaten berechnet.

Das Datenobjekt kann mittels eines Produkts aus der folgenden Gruppe bereitgestellt wird: Chipkarte und kryptografisches Datenobjekt-Datei wie eine PKCS#12-Datei. Ein Zertifikat im Format PKCS#12 trägt als Dateiendung PXF. Die kryptografische Datenobjekt-Datei kann zum Beispiel eine oder mehrere Zertifikate wie beispielweise des dem Nutzer zugeordnete Zertifikat und ein Intermediate Zertifikat der Zertifizierungsstelle, das die Vertrauenswürdigkeit des Zertifikats sicherstellt, sowie den privaten Schlüssel zu dem Zertifikat umfassen. So kann ein kryptografisches Datenobjekt in einem Dateiformat bereitgestellt werden, zum Beispiel als PKCS#12-Datei, welches den privaten Schlüssel, insbesondere in zugriffsgeschützter Form, beispielweise verschlüsselt, und darüber hinaus noch Datenobjekte wie das oder die Zertifikate enthalten kann.

Die Chipkarte kann als Signaturkarte ausgebildet sein, die den dem Besitzer oder Nutzer zugeordneten Signaturschlüssel enthält. Signaturkarten haben regelmäßig das Format von Scheckkarten. Sie bestehen wie diese aus Kunststoff und einem eingebetteten Microchip. Zur Nutzung der Karte sind ein Kartenlesegerät und Signatursoftware auf einem Computer nötig mit dem das Lesegerät verbunden ist. So können die Signaturfunktionen des Microchips auf der Signaturkarte genutzt werden, um ein elektronisches Dokument zu signieren. Die Chipkarte kann über die elektronische Signatur hinausgehende weitere Funktionen haben, zum Beispiel Verschlüsselungsfunktionen oder die Funktion als Sichtausweis (ID-Dokument).

In Verbindung mit der Vorrichtung zum Bereitstellen des digitalen Nutzergeheimnisses, welches einem geschützten Datenobjekt zugeordnet ist können die vorangehend im Zusammenhang mit dem verfahren erläuterten Ausgestaltungen entsprechend vorgesehen sein.

### Beschreibung von Ausführungsbeispielen

Nachfolgend werden weitere Ausführungsbeispiel unter Bezugnahme auf Figuren einer Zeichnung näher erläutert. Hierbei zeigen:
- Fig. 1: eine schematische Darstellung einer Anordnung zum Bereitstellen und wahlweisem Verteilen eines digitalen Nutzergeheimnisses, welches einem Datenobjekt zu dessen Schutz zugeordnet ist;
- Fig. 2: ein schematisches Ablaufdiagramm in Verbindung mit dem Bereitstellen des Nutzergeheimnisses und
- Fig. 3: eine schematische Darstellung betreffend eine digitale (Container-)Datenstruktur.

Im Folgenden werden Ausführungsbeispiele für ein Verfahren und eine Vorrichtung zum Bereitstellen und zum wahlweise sich anschließenden Verteilen oder Übertragen eines digitalen Nutzergeheimnisses beschrieben, welches einem digitalen Zertifikat eines Zertifikatsprodukts zugeordnet ist. Beim digitalen Nutzergeheimnis kann es sich zum Beispiel um eine PIN (persönliche Identifizierungsnummer), ein persönlicher Identifizierungscode (zum Beispiel eine Folge alphanumerischer Zeichen) oder eine PUK ("PIN *Unblocking Key*") handeln. In einer Ausgestaltung handelt es sich bei dem digitalen Nutzergeheimnis um eine CAN ("*Card Access Number*")*.* Auch andere Schlüssel, die zum Beispiel als eine beliebige Byte-Folge ausgebildet sind, können als digitales Nutzergeheimnis zum Einsatz kommen.

Bei der PIN handelt es sich um Zeichenfolge, die den Zugang zu einem digitalen Schlüssel erlaubt, insbesondere einem privaten Schlüssel. Die PUK ist eine weitere Ausführung eines Nutzergeheimnisses und dient zum Beispiel dazu, den Fehlbedienungszähler einer PIN zurückzusetzen. Der Einfachheit halber kann davon ausgegangen werden, dass sich die PUK ebenfalls auf ein Schlüsselobjekt bezieht.

Die Abkürzung PEK ("PIN *Encryption Key*") betrifft einen symmetrischen öffentlichen Schlüssel zum Verschlüsseln einer PIN Objektliste. Dieser Schlüssel kann, muss aber nicht in einem Zertifikat enthalten sein. Der PEK wird gemäß den nachfolgenden Erläuterungen in einer verschlüsselten Liste der PIN-Objekte referenziert.

Beispielhaft werden PINs und PUKs als Geheimnisse betrachtet, deren Wert für den Antragsteller oder Nutzer interessant ist. PINs stellen im Umfeld eines Zertifizierungsdiensteanbieters (Zertifizierungsstelle) Nutzergeheimnisse oder allgemein Geheimnisse dar, deren Kenntnis die Verwendung von kryptographischen, insbesondere privaten digitalen Schlüsseln erlauben. Wird eine falsche PIN beim Zugriff auf einen solchen Schlüssel verwendet, kann ein Fehlbedienungszähler des den (privaten) Schlüssel verwaltenden Systems dafür sorgen, dass die PIN-Abfrage deaktiviert und der entsprechende Schlüssel nicht mehr verwendbar wird. PUKs dienen in erster Linie dazu, einen PIN-Fehlbedienungszähler zurückzusetzen. In Form einer "Admin-PIN" können sie sogar erlauben, den Wert der PIN zu ändern. PIN und PUK haben daher in Bezug auf ihre Vertraulichkeit grundsätzlich einen hohen Schutzbedarf.

Die Korrektheit von PIN, PUK oder Schlüssel ist für die Erhaltung der Verwendbarkeit des (privaten) Schlüssels wichtig. Die Korrektheit wird bestimmt durch den Wert der PIN oder der PUK sowie ihre Zuordnung zum Schlüssel / zur PIN. Die Verfügbarkeit von PIN und PUK richtet sich nach der Kritikalität des Geschäftsprozesses des Kunden, für dessen (privaten oder geheimen) Schlüssel die PIN bereitgestellt wird. Für die Ermittlung des Schutzbedarfs der PIN wird die erstmalige Bereitstellung einer PIN betrachtet, zumal viele Zertifikatsprodukte mit privatem Schlüssel auf Smartcards basieren, deren PIN(s) zur Inbetriebnahme der Smartcard sowieso gewechselt werden muss.

Für die PUK ist davon auszugehen, dass diese zeitlich versetzt zur PIN Anwendung findet. Allerdings kann hier eine häufigere und schnelle Verfügbarkeit der PUK als der PIN gewünscht sein, um den Ausfall laufender Geschäftsprozesse des Kunden gering zu halten. Trotz dieser Unterschiede wird im Folgenden bei der Erläuterung von Ausführungsbeispielen in Bezug auf die Verfügbarkeit nicht zwischen PIN und PUK.

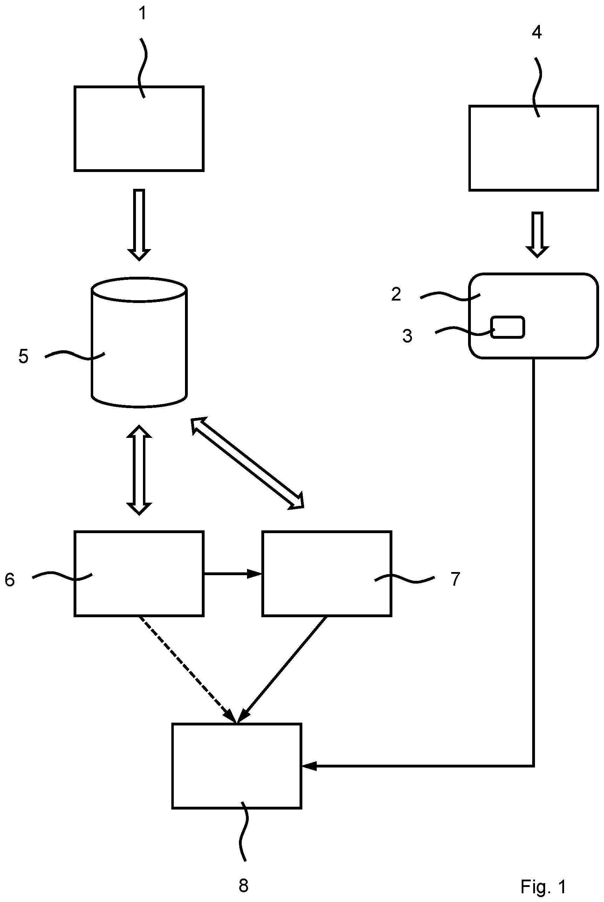

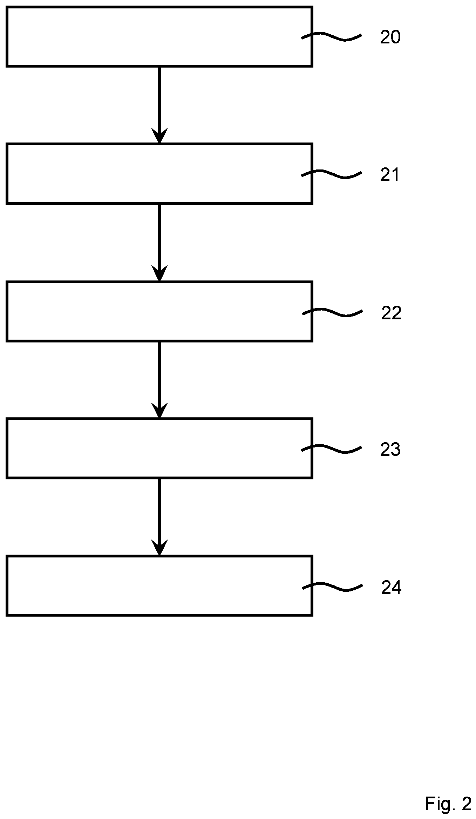

Fig. 1 zeigt eine schematische Darstellung einer Anordnung zum Bereitstellen und Verteilen eines Nutzergeheimnisses. Fig. 2 zeigt ein schematisches Ablaufdiagramm in Verbindung mit dem Bereitstellen und Verteilen des Nutzergeheimnisses. Die nachfolgend beschriebenen Ausgestaltungen beziehen sich im Wesentlichen auf eine Ausführung, bei der das digitale Nutzergeheimnis mit einem Zertifikatprodukt in Verbindung steht, welches im Zusammenhang mit einer Public-Key-Infrastruktur ein digitales Zertifikat mit dem öffentlichen Schlüssel sowie den zugeordneten geheimen Schlüssel umfasst. Mit dem digitalen Nutzergeheimnis ist der geheime Schlüssel gegen nichterlaubten Zugriff oder nichterlaubte Verwendung / Nutzung geschützt. Ohne Beschränkung der Allgemeinheit kann das erläuterte Verfahren aber auch in Verbindung mit anderen zu schützenden Datenobjekten angewendet werden, für die die Nutzung oder Verwendung nur bei Kenntnis des Nutzergeheimnisses erlaubt wird. Das digitale Nutzergeheimnis ist dann dem zu schützenden Datenobjekt zugeordnet und wird vergleichbar den nachfolgenden Erläuterungen sicher und zuverlässig bereitgestellt.

Mittels einer Datenverarbeitungseinrichtung eines Erzeugers 1 wird ein Nutzergeheimnis bereitgestellt (Schritt 20), beispielweise PIN oder PUK. Das Nutzergeheimnis ist einem ein digitales Zertifikat umfassenden Zertifikatsprodukt 2 zugeordnet, welches von einem Zertifizierungsdiensteanbieter 4 als Zertifizierungsstelle bereitgestellt wird, beispielweise mittels einer Chipkarte mit Speicherelement 3 oder einer Zertifikatsdatei.

Das digitale Zertifikat ist ein digitaler Datensatz, der bestimmte Eigenschaften von Personen oder Objekten bestätigt und dessen Authentizität und Integrität durch kryptografische Verfahren geprüft werden kann. Das digitale Zertifikat enthält insbesondere die zu seiner Prüfung erforderlichen Daten. Die Ausstellung des Zertifikats erfolgt durch eine offizielle Zertifizierungsstelle, die Certification Authority (CA). Bekannt sind zum Beispiel Public-Key-Zertifikate, beispielweise nach dem Standard X.509, welche die Identität des Inhabers und weitere Eigenschaften eines öffentlichen kryptographischen Schlüssels bestätigen.

Mittels der Datenverarbeitungseinrichtung des Erzeugers 1 wird im Schritt 21 ein digitales Nutzergeheimnis-Datenobjekt mit Nutzergeheimnisdaten erzeugt, welches im gewählten Ausführungsbeispiel auch als PIN- oder PUK-Objekt bezeichnet werden kann. Das Nutzergeheimnis-Datenobjekt umfasst einen Nutzergeheimniswert (zum Beispiel PIN Code), einen Nutzergeheimnistyp (zum Beispiel Typ PIN, PUK oder CAN angebend) sowie eine Nutzergeheimnisreferenz, welche die Zuordnung zwischen dem Zertifikatsprodukt 2 mit dem digitalen Zertifikat und dem digitalen Nutzergeheimnis-Datenobjekt anzeigt.

Im Schritt 22 wird das digitale Nutzergeheimnis-Datenobjekt mittels der Datenverarbeitungseinrichtung des Erzeugers 1 verschlüsselt.

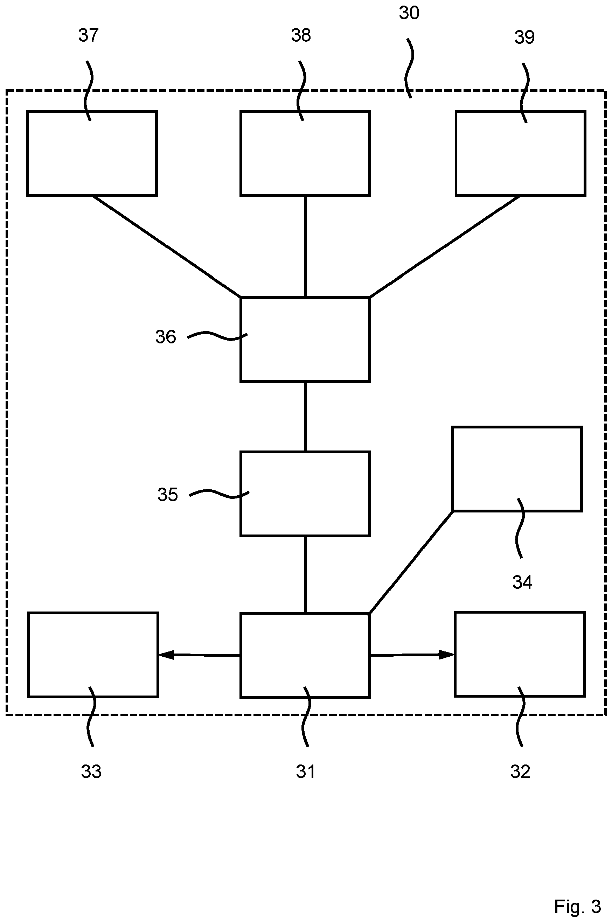

Sodann wird eine dem Zertifikatsprodukt 2 zugeordnete digitale Datenstruktur erzeugt (Schritt 23). Die digitale Datenstruktur umfasst Folgendes (vgl. auch weitere Erläuterungen in Verbindung mit Fig. 3 unten): (i) einen Nutzergeheimnis-Datencontainer (zum Beispiel PIN- oder PUK-Container), enthaltend das verschlüsselte erste digitale Nutzergeheimnis-Datenobjekt; (ii) Produktreferenzdaten, die eine Zuordnung zwischen dem Zertifikatsprodukt mit dem digitalen Zertifikat und dem Nutzergeheimnis-Datencontainer anzeigen; und (iii) Integritätsschutzdaten, die für den Nutzergeheimnis-Datencontainer bestimmt werden und anhand derer eine Datenintegrität des Nutzergeheimnis-Datencontainers nachprüfbar ist. Der Nutzergeheimnis-Datencontainer kann optional Ablaufdaten aufweisend erzeugt werden, die ein Ablaufkriterium für eine Gültigkeit des digitalen Nutzergeheimnis-Datenobjekts (PIN- oder PUK-Objekt) anzeigen.

Es könne in einer Ausführung also folgende Schritte vorgesehen sein. Die Nutzergeheimnisreferenz eines jeden PIN-Objekts (Nutzergeheimnis-Datenobjekts) wird so gewählt, dass Zusteller als auch Zertifikatsinhaber eindeutig erkennen können, welche PIN / PUK zu welchem Schlüssel des digitalen Zertifikats gehört. Die PIN-Objekte werden in einer Liste der PIN-Objekte zusammengefasst und mit dem festgelegten Verschlüsselungsschlüssel (PEK) verschlüsselt (Schritt 23). Die Referenz auf den PEK wird der Liste hinzufügt. Der PIN-Container wird erstellt, und die Referenz auf das Zertifikatsprodukt hinzugefügt. Auch hier muss der Zusteller diese Referenz eindeutig der Bestellung des Empfängers zuordnen können. Optional wird das Ablaufkriterium hinzugefügt. Über die so erstellte Struktur mit Nutzergeheimnis-Datencontainer (PIN-Container) und Produktreferenzdaten sowie wahlweise die das Ablaufkriterium anzeigenden Ablaufdaten werden die Integritätsschutzdaten berechnet und der digitalen (Container-)Datenstruktur hinzugefügt (vgl. auch Erläuterungen zu Fig. 3 unten).

Im Schritt 24 wird die digitale Datenstruktur in einer Datenspeichereinrichtung 5 gespeichert, insbesondere in einem geschützten Speicherbereich der Datenspeichereinrichtung 5 gespeichert wird, bei dem ein Zugriff auf die digitale Datenstruktur mittels einer Benutzerauthentisierung beschränkt wird. Damit steht die digitale Datenstruktur mit dem Nutzergeheimnis-Datencontainer zum Abruf durch eine Datenverarbeitungseinrichtung eines Verwalters 6 und / oder eine Datenverarbeitungseinrichtung eines Zustellers 7 zur Verfügung, um einer Datenverarbeitungseinrichtung eines Nutzers 8 die digitale Datenstruktur zu übermitteln. Die Datenverarbeitungseinrichtung des Nutzers 8 kann mit einem Kartenlesegerät (nicht dargestellt) zum Lesen des als Chipkarte ausgeführte Zertifikatsprodukts 2 verbunden sein.

Die erzeugte digitale (Container-)Datenstruktur wird an den Verwalter übergeben. Ist die kryptographische Funktionalität des Verwalters nicht ausreichend dimensioniert, kann dieser die digitale (Container-)Datenstruktur auch vom Erzeuger abholen.

Nach Empfang der digitalen (Container-)Datenstruktur muss der Verwalter diesen prüfen. Der Verwalter kann die Integrität des PIN-Containers prüfen. Kann er dies nicht erfolgreich abschließen, soll der Verwalter den Container nicht entgegennehmen. Der Verwalter kann vor dem Speichern prüfen, ob er über den in der Referenz auf den PEK indizierten Entschlüssellungsschlüssel verfügt. Falls nicht, kann er dies in geeigneter Form (zum Beispiel in seinem Log) signalisieren, da er die Produktbeschreibung nicht kennt und demzufolge nicht beurteilen kann, ob es sich hierbei um eine Fehlkonfiguration handelt oder ob der PIN-Container produktspezifisch für einen externen Zusteller verschlüsselt wurde. Nach erfolgreicher Übernahme und Speicherung des PIN-Containers soll der Verwalter den Erzeuger veranlassen, den PIN-Container aus seinem Datenbestand zu löschen.

Auslöser für eine Bereitstellung der PIN-Objekte nach dem Erzeugen der digitalen (Container-)Datenstruktur ist regelmäßig eine Anfrage des Empfängers / Nutzers gegenüber dem Zusteller. Für die Abfrage muss der Zusteller dem Verwalter die Referenz auf das Zertifikatsprodukt übergeben, für welches die PIN-Objekte angefordert werden. Handelt es sich um eine asynchron arbeitende Funktion, kann diese Referenz aus Sicherheitsgründen nicht Teil der Antwort sein. Kann der Verwalter die Integrität des PIN-Containers nach Abruf aus seiner Datenbank nicht verifizieren, soll er die weitere Verarbeitung des PIN-Containers abbrechen und dem Zusteller mit einem Fehler antworten.

Da der PIN-Container unverschlüsselt und ggf. ohne Referenz auf das Zertifikatsprodukt an den Zusteller übergeben wird (sofern der Verwalter über den Entschlüsselungsschlüssel verfügt), muss der Verwalter der Integritätsschutz am unverschlüsselten Container erneuern. Nur so kann der Zusteller die Integrität des PIN-Containers prüfen.

Das Löschen einer der digitalen (Container-)Datenstrukturen aus dem Datenbestand des Verwalters ist an die Definition des Ablaufkriteriums geknüpft. Dieses Ablaufkriterium kann, wie vorangehend beschrieben, Teil der digitalen (Container-)Datenstrukturen sein oder aber auch nur einer berechtigten Rolle bekannt, die das Löschen einer digitalen (Container-)Datenstrukturen verantwortet. Unabhängig davon kann der Zusteller (zum Beispiel auf Veranlassung durch den Empfänger) eine digitale (Container-)Datenstruktur jederzeit löschen. Ist in einem PIN-Container ein Ablaufkriterium enthalten, spielt es prinzipiell keine Rolle, wer die Löschaktion durchführt. Um aber dem Zusteller sowie dem Empfänger alle Freiheiten zu lassen, kann vorgesehen sein, dass der Verwalter nur dann die Löschung vornehmen kann, wenn das Ablaufkriterium einen konkreten Zeitpunkt benennt.

Die digitale(Container-) Datenstruktur kann mehrere Nutzergeheimnis-Datenobjekte (PIN- oder PUK-Objekt) umfassen, die den vorangehenden Ausführungen entsprechend erzeugt werden können.

Der Empfänger oder Nutzer 8 erhält die PIN-Objekte und ist außerhalb der IT-Infrastruktur der Zertifizierungsstelle 4 angeordnet. Der Empfänger 8 kann regelmäßig der Antragsteller / Nutzer auf das Zertifikatsprodukt 2 sein und besitzt die Kontrolle über die privaten Schlüssel, zu denen ein PIN-Container erzeugt wird.

Der Erzeuger 1 erstellt somit die PIN / PUK-Objekte und übergibt diese in Form der PIN-Container (Nutzergeheimnis-Datencontainer) an den Verwalter. Es wird davon ausgegangen, dass die Datenverarbeitungseinrichtung des Erzeugers 1 in einem streng geschützten Datenverarbeitungsbereich arbeitet.

Der Verwalter 6 verwaltet die PIN-Container (Nutzergeheimnis-Datencontainer) und kann deren Struktur und Integrität prüfen. Außerdem kann er alleinigen Zugriff auf die kryptographischen Schlüssel haben, mit denen die PIN-Container verifiziert und im Klartext wiederhergestellt werden kann. Hierbei müssen sich die zugreifenden Systeme ("Zusteller", "Erzeuger") authentisieren. Wahlweise kann der Verwalter auch selbständig PIN-Container löschen. Der Verwalter kann in einem geschützten Netzwerksegment lokalisiert sein und nicht aus einem öffentlichen Netz erreichbar sein.

Der Zusteller 7 ruft den (entschlüsselten) PIN-Container bei der Datenverarbeitungseinrichtung des Verwalters 6 ab und stellt die enthaltenen PIN-Objekte dem Empfänger (Nutzer) 8 in gewünschter Form bereit. Es kann zwischen internen und externen Zustellern unterschieden werden: interne Zusteller sind Datenverarbeitungssysteme, die in einer IT-Infrastruktur der Zertifizierungsstelle 4 lokalisiert sind und die PIN-Objekte im Klartext an den Empfänger übergeben; und externe Zusteller sind Systeme, die außerhalb der IT-Infrastruktur der Zertifizierungsstelle 4 liegen. Diese können PIN-Objekte in verschlüsselter Form von der Datenverarbeitungseinrichtung des Verwalters 6 erfragen.

Die netzwerktechnische Lokalisierung der Datenverarbeitungseinrichtung des Zustellers 7 ist kann unbestimmt sein. Sie kann sich in einem relativ schwach geschützten Bereich befinden. Bei dem vorgeschlagenen Verfahren zum Bereitstellen eines einem digitalen Zertifikat zugeordneten digitalen Nutzergeheimnisses, zum Beispiel PIN / PUK, können ein oder mehrere der folgenden Sicherheitskriterien ausgebildet sein:
- Kryptographische Schlüssel sind nie örtlich zusammen (zum Beispiel im gleichen System) mit ihrer PIN / PUK zu verwalten. Ein Beispiel hierfür wäre die Ausgabe einer PKCS#12-Datei und der zugehörigen PIN durch das Antragsportal. Kann die örtliche Trennung nicht sichergestellt werden, sollen PINs / PUKs und kryptographische Schlüssel durch zusätzliche Maßnahmen geschützt werden, um deren gleichzeitige Verwendung zu erschweren. Eine Möglichkeit hierfür besteht in einem zweiten Authentifizierungsfaktor vor Preisgabe einer PIN / PUK.
- Da PINs und PUKs getrennt vom kryptographischen Schlüssel aufbewahrt werden sollen, soll ihre Zusammengehörigkeit erhalten bleiben. Das Verfahren zur Anbringung und Prüfung dieser Zusammengehörigkeit lässt eine eventuelle Manipulation erkennen.
- PINs und PUKs können direkt nach Erzeugung asymmetrisch verschlüsselt werden. Die Verschlüsselung wird bis zur Ausgabe der PINs und PUKs beibehalten.
- Bei Ausgabe von PINs und PUKs an den Nutzer können geeignete Maßnahmen getroffen werden, die Verfügbarkeit der unverschlüsselten Objekte so weit wie technisch möglich zu minimieren. Bei der Ausgabe über Web-Browser zum Beispiel kann vorgesehen sein, das Cachen der HTML-Seite zu begrenzen.
   Referenzen auf kryptographische Schlüssel können dem *"Subject Key Identifier"* (SKI) eines X.509-Zertifikats entsprechen. Daher können Hash-Werte verwenden werden, wobei eine Ausführung analog zum SKI SHA-1 vorgesehen sein kann.
- Über den Zugriff oder den Abruf von PINs und PUKs kann an zugriffskontrollierter Stelle ein Nachweis geführt werden. Für diesen Nachweis werden keine weiteren Sicherheitsmechanismen gefordert.
- Die Datenkommunikation zwischen allen prozessbeteiligten Datenverarbeitungseinrichtungen 1, 4, .., 6 sowie ihren wahlweise zugeordneten Datenbanken kann authentisiert stattfinden und mittels TLS 1.2 (TLS - *Transport Layer Security*) mit AES (*Advanced Encryption Standard*) und SHA-2 (*Secure Hash Algorithm*) abgesichert sein.
- Für alle Prozessbeteiligten kann ein gegenseitiges Authentisieren vorgesehen sein, um ihre Zugriffsberechtigung nachzuweisen und eine Rechtezuordnung entsprechend ihrer Rolle zu erlauben.

Für den Umgang mit den digitalen PIN-Objekten können einige nachfolgend erläuterte Steuerparameter vorgesehen sein. Die Steuerparameter können Eigenschaften des Zertifikatsprodukts 2 sein. Es kann festgelegt sein, ob die PIN-Objekte für ein Zertifikatsprodukt (zusätzlich) auf Papier ausgeliefert werden sollen. So kann es vorgesehen sein, dass für eHealth-Karten (SMC-B und HBA) zusätzlich ein papierbasierter PIN-Brief an den Nutzer versendet werden soll. Die Auswertung dieser Festlegung erfolgt alleinig durch den Erzeuger.

Alternativ oder ergänzend kann eine optionale Beschränkung der Bereitstellung von PIN-Objekten erfolgen, die das Löschen der PIN-Container bestimmt, zum Beispiel anhand der ein Ablaufkriterium anzeigenden Ablaufdaten. Folgende Ausgestaltungen können vorgesehen sein: eine bestimmte Anzahl von Abrufen des Nutzergeheimnisses (PIN / PUK); eine bestimmte Anzahl von Tagen nach Empfang der PIN-Objekte; Zeitpunkt des Ablaufs des Zertifikatsprodukts; Zeitpunkt der Erstellung des PIN-Containers und keine Beschränkung.

Der zu verwendende Verschlüsselungsschlüssel kann optional angegeben werden, sofern der geschützte PIN-Container ausschließlich von Zustellern der Zertifizierungsstelle ausgegeben wird. Im Falle einer produktspezifischen Verschlüsselung (zum Beispiel im Rahmen eines Projektes für externe Zusteller) kann der produktspezifische Verschlüsselungsschlüssel explizit benannt werden.

Für das Hinzufügen von PIN-Containern zum Datenbestand des Verwalters 6 ist nur dem Inhaber der Rolle Erzeuger der schreibende Zugriff auf die Datenbank 5 des Verwalters 6. Die Inhaber der Rolle Zusteller 7 sollen ausschließlich lesend, ggf. auch löschend zugreifen dürfen.

Um einem System eine Rolle und damit die notwendigen Berechtigungen eindeutig zuordnen zu können, authentisiert sich das System als "Client" gegenüber dem Kommunikationspartner "Server". Die Kommunikation kann TLS-gesichert ablaufen (vgl. weitere Erläuterungen unten). Daher kann die Authentisierung des Clients mit Benutzernamen und Passwort als auch mittels TLC-Client-Zertifikat stattfinden.

Für Transport und Aufbewahrung der PIN-Objekte sind (Daten-)Container ausgebildet, die eine universelle Struktur aufweisen. Der Container kann sämtliche PINs und ggf. PUKs des Zertifikatsprodukts 2 aufnehmen. Wesentliche Inhalte eines solchen Containers sind zum Beispiel: Typ und Inhalt des PIN-Objektes; Referenz des PIN-Objektes auf das Schlüsselobjekt oder die PIN; Referenz(en) auf das Zertifikatsprodukt 2, auf den sich der PIN-Container bezieht; Ablaufkriterium; und Integritätsschutz.

Bei den hier betrachteten PINs kann es sich um die bei der Produktion erzeugten PINs unabhängig von ihrer späteren Verwendung handeln. Stellt eine PIN eine temporäre (initiale) PIN dar, die bei Inbetriebnahme des Zertifikatsproduktes 2 zwingend geändert werden muss, kann der Typ des PIN-Objektes entsprechend formuliert werden. Der Zusteller 7 sollte temporäre PINs entsprechend darstellen.

Fig. 3 zeigt eine schematische Darstellung einer möglichen Strukturierung einer solchen digitalen (Container-)Datenstruktur 30.

Die Elemente der digitalen (Container-)Datenstruktur 30 sind bei dem gezeigten Ausführungsbeispiel Folgende:
- PIN-Container 31 (Nutzergeheimnis-Datencontainer);
- Integritätsschutzdaten 32: Ein über den PIN-Container 31 (mindestens ein PIN-Objekt und Produktreferenzdaten 33) berechnetes Integritätsmerkmal;
- Produktreferenzdaten 33: Zeigen eine eindeutige Referenz auf das Zertifikatsprodukt an, für welches die PIN-Objekte erzeugt wurden. Diese Referenz muss vom Zusteller interpretiert werden können, wie zum Beispiel die Einzelantragsnummer für das Zertifikatsprodukt.
- Ablaufdaten 34: Festlegung zur maximalen Aufbewahrungsfrist des PIN-Containers 31. Dieser Wert ist produktspezifisch.
- verschlüsseltes digitales Nutzergeheimnis-Datenobjekt 35 (verschlüsselte Liste von PIN-Objekten): Dieses Element wird einschließlich aller Unterelemente verschlüsselt und enthält eine Referenz auf den zum Verschlüsseln des digitalen Nutzergeheimnis-Datenobjekts verwendeten symmetrischen öffentlichen Schlüssel.
- PIN-Objekt 36 (Nutzergeheimnis-Datenobjekt): Ein einzelnes PIN-Objekt. Es können alle PIN-Objekte des Zertifikatsprodukts (PINs und PUKs für alle geschützten Schlüssel) in einem Container enthalten sein.
- Nutzergeheimniswert 37 (Wert): Wert des PIN-Objektes.
- Nutzergeheimnistyp 38 (Typ): Typ des PIN-Objektes ("InitialPIN", "PIN", "PUK", "Admin-PIN", ...).
- Nutzergeheimnisreferenz 39: Name des mit der PIN / PUK geschützten Schlüssels des Zertifikatsprodukts. Bei Smartcards kann zum Beispiel der Name des PKCS#15-Objektes verwendet werden, bei PKCS#12-Dateien entweder die "local key ID" oder der "friendly name" des Schlüsseleintrags.

Ausschließlich die Liste des oder der PIN-Objekte 36 ist verschlüsselt.

Das Datenformat der digitalen (Container-)Datenstruktur 30 ist eingerichtet, die notwendigen Informationen zur Interpretation der digitalen (Container-)Datenstruktur 30 zu enthalten. Einfache Textdateien erfordern Festlegungen zu Format und Kanonisierung (insbesondere zur Prüfung ihrer Integrität) außerhalb der Datei und sind daher nur dann geeignet, wenn hierfür eindeutige und verbindliche Festlegungen über alle Rolleninhaber hinweg getroffen werden. Besser geeignet sind JSON- oder XML-Dateien, da hierfür bereits standardisierte Formatisierungs- und Absicherungsvorgaben existieren.

Die Vertraulichkeit der PIN-Objekte 36 wird durch deren Verschlüsselung erreicht. Vorgeschlagen wird zum Beispiel ein auf die Verschlüsselung von symmetrischen Schlüsseln basierendes RSA-Verfahren. Die RSA-Schlüssellänge sollte mindestens 3072 Bit sein. Die Verschlüsselung der PIN-Objekte 36 erfolgt durch den Erzeuger und wird für die gesamte Dauer der Aufbewahrung der PIN-Container 31 aufrechterhalten. Der Erzeuger verwendet zur Verschlüsselung den öffentlichen Schlüssel des Verwalters oder des externen Zustellers, um sicherzustellen, dass nur diese in der Lage sind, die PIN-Objekte 36 im Klartext wiederherzustellen. Dies bedeutet, dass der Verwalter die einzige Zugriffsberechtigung auf den Entschlüsselungsschlüssel erhält.

Als Kennzeichnung (Produktreferenzdaten 33) kann der X.509-Key-Identifier oder der über den öffentlichen Schlüssel berechnete Hash-Wert verwendet werden. Bewahrt der Verwalter den privaten Entschlüsselungsschlüssel in einem HSM auf, muss er selbst eine Zuordnung des PEK zu seinem konkreten Aufbewahrungsort im HSM (Slot, Schlüsselkennung) durchführen.

Für den PIN-Container 31 als Ganzes ist mit den Integritätsschutzdaten 32 ein Integritätsschutz gebildet, der den Zusammenhang zwischen den Produktreferenzdaten 33 (Referenz auf das Zertifikatsprodukt) und PIN-Objekten 36 sicherstellt. Ist das Ablaufkriterium mittels der Ablaufdaten 34 angegeben, kann auch dieses in den Integritätsschutz einbezogen werden. Da die PIN-Objekte 36 verschlüsselt sind, kann ein zusätzlicher Integritätsschutz eines einzelnen PIN-Objektes entfallen. Der Integritätsschutz ist für die Aufbewahrung der PIN-Container 31 vorgesehen und kann bei Entgegennahme des PIN-Containers 31 vom Erzeuger als auch für die Übergabe vom Verwalter an den Zusteller sichergestellt werden. Ein PIN-Container 31, dessen Integrität nicht verifiziert werden kann, soll nicht entgegengenommen oder ausgeliefert werden.

Als Schutzmechanismen zum Bestimmend der Integritätsschutzdaten 32 kommen beispielweise eine Signatur oder ein HMAC (*Keyed-Hash Message Authentication* Code) in Betracht. Der Integritätsschutz kann vom Ersteller bereitgestellt werden. Er wird vom Verwalter bei Entgegennahme geprüft, bei positivem Ergebnis soll der Verwalter den Integritätsschutz des Erzeugers durch einen eigenen Schutz ersetzen. Dabei kann der Schutzmechanismus gewechselt werden.

Die Signatur des PIN-Containers 31 kann durch den Verwalter bei Entgegennahme des PIN-Containers vom Erzeuger und mindestens vor Ausgabe an den Zusteller geprüft werden. Das Format der Signatur soll der gewählten Struktur des PIN-Containers 31 entsprechen. Für eine XML-Struktur wäre dementsprechend XMLDSig der Signaturstandard. Eine Mischung, wie zum Beispiel PKCS#7 über eine XML-Struktur, soll vermieden werden. Die Angabe des Signaturzeitpunkts ist nicht interessant. Schlüssellänge und Signaturalgorithmus ermöglichen einen langfristigen Einsatz. Bei Verwendung des RSA-Verfahrens kann mindestens eine Schlüssellänge von 3072 Bit vorgesehen sein. Bei Verwendung des ECDSA-Verfahren kann mindestens die Schlüssellänge von 384 Bit verwendet werden. Als Hash-Algorithmus kann mindestens SHA-256 genutzt werden.

Der HMAC ist eine alternative Möglichkeit zum Schutz der Integrität des PIN-Containers 31. Die Verwendung von CMAC (*Cipher-Based Message Authentication* Code) ist als kryptographisch anspruchsvolleres Verfahren ebenfalls möglich. Als Hash-Algorithmus kann SHA-256 verwendet werden. Das HMAC-Geheimnis kann eine Länge von 128 Bit und eine Entropie von mindestens 64 Bit aufweisen. Die Verwendung HMAC-geschützter PIN-Container kann ein Problem darstellen, wenn der Zusteller in die Lage versetzt werden soll, den HMAC des PIN-Containers zu prüfen, aber in einem wenig geschützten Netzwerksegment lokalisiert ist. In diesem Fall soll der Zusteller ein eigenes HMAC-Geheimnis erhalten und der Verwalter vor Auslieferung den Integritätsschutz mit dem HMAC-Geheimnis Schlüssel des Zustellers erneuern.

Nachfolgend wir die Verwendung von Schlüsseln und Nutzergeheimnissen weiter erläutert, insbesondere in Verbindung mit TLS-Zertifikaten (TLS - *Transport Layer Security*)*.*

Für die Bereitstellung von TLS-Zertifikaten kann die gesicherte Kommunikation zwischen allen Prozessbeteiligten mittels eines Informationssicherheits-Managementsystems (ISMS) nach Standard ISO / IEC 27001 implementiert werden.

Ein Verschlüsselungsschlüsselpaar des Verwalters soll unter der Kontrolle des Verwalters erzeugt werden. Da dem Entschlüsselungsschlüssel die höchste Vertrauenswürdigkeit in dem hier beschriebenen Prozess zukommt, soll das Schlüsselpaar in einem HSM erzeugt werden. Der öffentliche Schlüssel lässt sich mit gängigen Methoden extrahieren und muss in der Konfiguration des Erzeugers für den Zweck der PIN-Objekt-Verschlüsselung hinterlegt werden.

Für den Integritätsschutz mittels Signatur werden zwei Signaturschlüssel vorgesehen: für den Erzeuger und den Verwalter. Da der Erzeuger bevorzugt in einem stark zugriffskontrolllierten Netzwerksegment verortet ist, kann der Speicher für den Signaturschlüssel relativ frei gewählt werden. Der Signaturschlüssel des Verwalters soll im selben Schlüsselspeicher wie der Entschlüsselungsschlüssel liegen, sofern die Leistungsfähigkeit der Signaturfunktion der Produktivität des Erzeugers entspricht oder übersteigt.

Für den Integritätsschutz mittels HMAC werden mindestens drei HMAC-Geheimnisse benötigt: für den Erzeuger, für den Verwalter, für den Zusteller. Alle drei Geheimnisse sollen sich deutlich voneinander unterscheiden. Nur der Verwalter muss alle drei Geheimnisse kennen, Erzeuger und Zusteller benötigen lediglich Kenntnis ihres eigenen HMAC-Geheimnisses. Die Speicherorte für Erzeuger und Verwalter sollen dem des Signaturschlüssels entsprechen. Für den Zusteller wird hier kein Speicherort festgelegt. Das HMAC-Geheimnis kann als symmetrischer Schlüssel betrachtet werden.

Die Verwendung asymmetrischer Schlüssel zum Verschlüsseln des PIN-Containers 31 kommt bei der Verschlüsselung sowie Signatur als Integritätsschutz zum Tragen. Grundsätzlich können hierfür reine asymmetrische Schlüsselpaare verwendet werden, da Herkunftsnachweis einer Signatur, Gültigkeitsbegrenzungen und Sperrungen keine Rolle spielen. Für die Verwaltung der öffentlichen Schlüssel können auch X.509- oder CV-Zertifikate verwendet werden. Der Gültigkeitszeitraum des Zertifikats kann dann die kryptographische Verwendbarkeit des enthaltenen Schlüssels widerspiegeln. Selbstsignierte Zertifikate sind akzeptabel, bei zentraler Zertifikatsausstellung durch eine Zertifizierungsstelle sind die Verfolgung der Zertifizierungsstellen-Kette sowie Sperrprüfungen nicht erforderlich.

Der Erzeuger soll vor Produktion eines Zertifikatsproduktes wissen, wo er die PIN-Objekte 36 ausgeben soll. Eine Produktbeschreibung umfasst die Vorgabe, die PIN-Objekte 36 digital bereitzustellen. Bei digitaler Bereitstellung der PIN-Objekte 36 ist als erstes die Verfügbarkeit des Verschlüsselungsschlüssels und des Integritätsschutzschlüssels zu prüfen. Sind diese nicht vorhanden, soll das Zertifikatsprodukt nicht produziert werden, da sonst die Sicherheit der PIN-Objekte nicht gewährleistet ist.

### Bezugszeichenliste

- 1: Datenverarbeitungseinrichtung eines Erzeugers
- 2: Zertifikatprodukt
- 3: Speicherelement von Chipkarte
- 4: Zertifizierungsstelle
- 5: Datenspeichereinrichtung
- 6: Datenverarbeitungseinrichtung eines Verwalters
- 7: Datenverarbeitungseinrichtung eines Zustellers
- 8: Datenverarbeitungseinrichtung eines Nutzers
- 20, ... , 24: Verfahrensschritte
- 30: digitale (Container-)Datenstruktur
- 31: PIN-Container
- 32: Integritätsschutzdaten
- 33: Produktreferenzdaten
- 34: Ablaufdaten
- 35: verschlüsseltes digitales Nutzergeheimnis-Datenobjekt
- 36: PIN-Objekt
- 37: Nutzergeheimniswert
- 38: Nutzergeheimnistyp
- 39: Nutzergeheimnisreferenz

## Patentansprüche

1. Verfahren zum Bereitstellen eines digitalen Nutzergeheimnisses, welches einem geschützten Datenobjekt zugeordnet ist, mit:
- Bereitstellen eines Datenobjekts (2), welches durch ein erstes Nutzergeheimnis geschützt wird;
- Erzeugen eines ersten digitalen Nutzergeheimnis-Datenobjekts (36) für das erste Nutzergeheimnis, wobei das erste digitale Nutzergeheimnis-Datenobjekt (36) erste Nutzergeheimnisdaten aufweist, die für das erste digitale Nutzergeheimnis-Datenobjekt (36) Folgendes umfassen:
- einen ersten Nutzergeheimniswert (37),
- einen ersten Nutzergeheimnistyp (38) sowie
- eine erste Nutzergeheimnisreferenz (39), welche eine Zuordnung zwischen dem Datenobjekt (2) und dem ersten digitalen Nutzergeheimnis-Datenobjekt (36) anzeigt;
- digitales Verschlüsseln des ersten digitalen Nutzergeheimnis-Datenobjekts (36);
- Erzeugen einer dem Datenobjekt (2) zugeordneten digitalen Datenstruktur (30), aufweisend:
- einen Nutzergeheimnis-Datencontainer (31), enthaltend das verschlüsselte erste digitale Nutzergeheimnis-Datenobjekt (36);
- Produktreferenzdaten (33), die eine Zuordnung zwischen dem Datenobjekt (2) und dem Nutzergeheimnis-Datencontainer (31) anzeigen; und
- Integritätsschutzdaten (32), die für zumindest den Nutzergeheimnis-Datencontainer (31) und die Produktreferenzdaten (33) bestimmt werden und anhand derer eine Datenintegrität des Nutzergeheimnis-Datencontainers (31) nachprüfbar ist; und
- Speichern der digitalen Datenstruktur (30) in einer Datenspeichereinrichtung (3).

2. Verfahren nach Anspruch 1, **dadurch gekennzeichnet, dass** das Bereitstellen des Datenobjekts (2) ein Bereitstellen eines Zertifikatsprodukts mit einem digitalen Zertifikat, welches einen öffentlichen Schlüssel aufweist, und mit einem dem öffentlichen Schlüssel im Rahmen einer Public-Key-Infrastruktur zugeordneten geheimen Schlüssel umfasst, wobei der geheime Schlüssel durch das erste Nutzergeheimnis geschützt wird.

3. Verfahren nach Anspruch 1 oder 2, **dadurch gekennzeichnet, dass** das erste digitale Nutzergeheimnis-Datenobjekt (31) ein Nutzergeheimnis aus der folgenden Gruppe anzeigt: persönlicher Identifizierungscode, persönliche Identifizierungsnummer und persönlicher Schlüssel.

4. Verfahren nach mindestens einem der vorangehenden Ansprüche, **dadurch gekennzeichnet, dass** der Nutzergeheimnis-Datencontainer (31) Ablaufdaten (34) aufweisend erzeugt wird, die ein Ablaufkriterium für eine Gültigkeit des Nutzergeheimnis-Datencontainers (31) und / oder des ersten digitalen Nutzergeheimnis-Datenobjekts (36) anzeigen.

5. Verfahren nach Anspruch 4, **dadurch gekennzeichnet, dass** das Ablaufkriterium zumindest eines der folgenden Kriterien anzeigt: zugelassene Anzahl von Abrufen für Nutzergeheimnis-Datencontainer (31) und / oder erstes digitales Nutzergeheimnis-Datenobjekt (36), zugelassener Nutzungszeitraum für Nutzergeheimnis-Datencontainer (31) und / oder erstes digitales Nutzergeheimnis-Datenobjekt (36), Ablaufdatum für Nutzergeheimnis-Datencontainer (31) und / oder erstes digitales Nutzergeheimnis-Datenobjekt (36), Ablaufzeitpunkt für das Zertifikatsprodukt und Zeitpunkt des Erzeugens der digitalen Datenstruktur (30).

6. Verfahren nach mindestens einem der vorangehenden Ansprüche, **dadurch gekennzeichnet, dass** das erste digitale Nutzergeheimnis-Datenobjekt (36) verschlüsselt wird mit einem öffentlichen Schlüssel eines asymmetrischen Kryptosystems und / oder einem geheimen Schlüssel eines symmetrischen Kryptosystems.

7. Verfahren nach mindestens einem der vorangehenden Ansprüche, **dadurch gekennzeichnet, dass** weiterhin Folgendes vorgesehen ist:
- Erzeugen eines zweiten digitalen Nutzergeheimnis-Datenobjekts für ein zweites Nutzergeheimnis, wobei das zweite digitale Nutzergeheimnis-Datenobjekt zweite Nutzergeheimnisdaten aufweist, die von den ersten Nutzergeheimnisdaten verschieden sind und für das zweite digitale Nutzergeheimnis-Datenobjekt Folgendes umfassen:
- einen zweiten Nutzergeheimniswert,
- einen zweiten Nutzergeheimnistyp sowie
- eine zweite Nutzergeheimnisreferenz umfassen, welche eine Zuordnung zwischen dem Datenobjekt (2) und dem zweiten digitalen Nutzergeheimnis-Datenobjekt anzeigt; und
- digitales Verschlüsseln des zweiten digitalen Nutzergeheimnis-Datenobjekts;
wobei die dem Datenobjekt (2) zugeordnete digitale Datenstruktur (30) mit einem Nutzergeheimnis-Datencontainer erzeugt wird, welcher das verschlüsselte erste und das verschlüsselte zweite digitale Nutzergeheimnis-Datenobjekt umfasst.

8. Verfahren nach mindestens einem der vorangehenden Ansprüche, **dadurch gekennzeichnet, dass** die digitale Datenstruktur (30) in einem geschützten Speicherberiech der Datenspeichereinrichtung (3) gespeichert wird, bei dem ein Zugriff auf die digitale Datenstruktur (30) mittels einer Benutzerauthentisierung beschränkt wird.

9. Verfahren nach mindestens einem der vorangehenden Ansprüche, **dadurch gekennzeichnet, dass** die Integritätsschutzdaten (32) eine oder mehrere der folgenden für den Nutzergeheimnis-Datencontainer (31) bestimmten Daten umfassen: digitale Signatur, Hash-Wert und Message Authentication Code wie Keyed-Hash Message Authentication Code oder Cipher-Based Message Authentication Code.

10. Verfahren nach mindestens einem der vorangehenden Ansprüche, soweit auf Anspruch 4 rückbezogen, **dadurch gekennzeichnet, dass** die Integritätsschutzdaten (32) über den Nutzergeheimnis-Datencontainer (31) und die Ablaufdaten (34) bestimmt werden.

11. Verfahren nach mindestens einem der vorangehenden Ansprüche, **dadurch gekennzeichnet, dass** das Datenobjekt (2) mittels eines Produkts aus der folgenden Gruppe bereitgestellt wird: Chipkarte und kryptografisches Datenobjekt-Datei wie eine PKCS#12-Datei.

12. Vorrichtung zum Bereitstellen eines digitalen Nutzergeheimnisses, welches einem geschützten Datenobjekt zugeordnet ist, aufweisend eine Speichereinrichtung (3) und einen oder mehrere Prozessoren, die für Folgendes eingerichtet sind:
- Bereitstellen eines Datenobjekts (2), welches durch ein erstes Nutzergeheimnis geschützt wird;
- Erzeugen eines ersten digitalen Nutzergeheimnis-Datenobjekts (36) für das erste Nutzergeheimnis, wobei das erste digitale Nutzergeheimnis-Datenobjekt (36) erste Nutzergeheimnisdaten aufweist, die für das erste digitale Nutzergeheimnis-Datenobjekt (36) Folgendes umfassen:
- einen ersten Nutzergeheimniswert (37),
- einen ersten Nutzergeheimnistyp (38) sowie
- eine erste Nutzergeheimnisreferenz (39), welche eine Zuordnung zwischen dem Datenobjekt (2) und dem ersten digitalen Nutzergeheimnis-Datenobjekt (36) anzeigt;
- digitales Verschlüsseln des ersten digitalen Nutzergeheimnis-Datenobjekts (36);
- Erzeugen einer dem Datenobjekt (2) zugeordneten digitalen Datenstruktur (30), aufweisend:
- einen Nutzergeheimnis-Datencontainer (31), enthaltend das verschlüsselte erste digitale Nutzergeheimnis-Datenobjekt (36);
- Produktreferenzdaten (33), die eine Zuordnung zwischen dem Datenobjekt (2) und dem Nutzergeheimnis-Datencontainer (31) anzeigen; und
- Integritätsschutzdaten (32), die für zumindest den Nutzergeheimnis-Datencontainer (31) und die Produktreferenzdaten (33) bestimmt werden und anhand derer eine Datenintegrität des Nutzergeheimnis-Datencontainers (31) nachprüfbar ist; und
- Speichern der digitalen Datenstruktur (30) in einer Datenspeichereinrichtung (3).

## Claims

1. A method for providing a digital user secret that is associated with a protected data object involving:
- provision of a data object (2) that is protected by a first user secret;
- generation of a first digital user secret data object (36) for the first user secret, wherein the first digital user secret data object (36) comprises first user secret data encompassing the following for the first digital user secret data object (36):
- a first user secret value (37),
- a first user secret type (38) and
- a first user secret reference (39) indicating an association between the data object (2) and the first digital user secret data object (36);
- digital encryption of the first digital user secret data object (36);
- generation of a digital data structure (30) associated with the data object (2), comprising:
- a user secret data container (31) containing the encrypted first digital user secret data object (36);
- product reference data (33) indicating an association between the data object (2) and the user secret data container (31); and
- integrity protection data (32) determined for at least the user secret data container (31) and the product reference data (33) and with the help of which data integrity of the user secret data container (31) can be verified; and
- storage of the digital data structure (30) in a data storage device (3).

2. The method according to claim 1, **characterized in that** the provision of the data object (2) involves providing a certificate product with a digital certificate that includes a public key and comprises a secret key associated with the public key within the framework of a public key infrastructure, wherein the secret key is protected by the first user secret.

3. The method according to claim 1 or 2, **characterized in that** the first digital user secret data object (31) indicates a user secret from the following group: personal identification code, personal identification number and personal key.

4. The method according to at least one of the preceding claims, **characterized in that** the user secret data container (31) is generated with expiry data (34) indicating an expiry criterion for the validity of the user secret data container (31) and/or the first digital user secret data object (36).

5. The method according to claim 4, **characterized in that** the expiry criterion indicates at least one of the following criteria: authorized number of retrievals for user secret data container (31) and/or first digital user secret data object (36), authorized usage period for user secret data container (31) and/or first digital user secret data object (36), expiry date for user secret data container (31) and/or first digital user secret data object (36), expiry date for the certificate product and generation date of the digital data structure (30).

6. The method according to at least one of the preceding claims, **characterized in that** the first digital user secret data object (36) is encrypted with a public key of an asymmetric cryptographic system and/or a secret key of a symmetric cryptographic system.

7. The method according to at least one of the preceding claims, **characterized in that** the following is furthermore provided:
- generation of a second digital user secret data object for a second user secret, wherein the second digital user secret data object comprises second user secret data that are different from the first user secret data and encompass the following for the second digital user secret data object:
- a second user secret value,
- a second user secret type and
- a second user secret reference indicating an association between the data object (2) and the second digital user secret data object; and
- digital encryption of the second digital user secret data object;
wherein the digital data structure (30) associated with the data object (2) is generated with a user secret data container including the encrypted first and the encrypted second digital user secret data objects.

8. The method according to at least one of the preceding claims, **characterized in that** the digital data structure (30) is stored in a protected storage area of the data storage device (3), in which access to the digital data structure (30) is restricted by means of user authentication.

9. The method according to at least one of the preceding claims, **characterized in that** the integrity protection data (32) include one or more of the following data intended for the user secret data container (31): digital signature, hash value and Message Authentication Code such as Keyed-Hash Message Authentication Code or Cipher-Based Message Authentication Code.

10. The method according to at least one of the preceding claims, insofar as reference is made back to claim 4, **characterized in that** the integrity protection data (32) are determined based on the user secret data container (31) and the expiry data (34).

11. The method according to at least one of the preceding claims, **characterized in that** the data object (2) is provided by means of a product from the following group: chip card and cryptographic data object file such as a PKCS#12 file.

12. A device for providing a digital user secret that is associated with a protected data object, comprising a storage device (3) and one or more processors configured for:
- provision of a data object (2) that is protected by a first user secret;
- generation of a first digital user secret data object (36) for the first user secret, wherein the first digital user secret data object (36) comprises first user secret data encompassing the following for the first digital user secret data object (36):
- a first user secret value (37),
- a first user secret type (38) and
- a first user secret reference (39) indicating an association between the data object (2) and the first digital user secret data object (36);
- digital encryption of the first digital user secret data object (36);
- generation of a digital data structure (30) associated with the data object (2), comprising:
- a user secret data container (31) containing the encrypted first digital user secret data object (36);
- product reference data (33) indicating an association between the data object (2) and the user secret data container (31); and
- integrity protection data (32) determined for at least the user secret data container (31) and the product reference data (33), by means of which data integrity of the user secret data container (31) can be verified; and
- storage of the digital data structure (30) in a data storage device (3).

## Revendications

1. Procédé pour fournir un secret numérique d'utilisateur attribué à un objet de données protégé, comprenant de :
- fournir un objet de données (2), qui est protégé par un premier secret d'utilisateur ;
- générer un premier objet de données de secret d'utilisateur numérique (36) pour le premier secret d'utilisateur, dans lequel le premier objet de données de secret d'utilisateur numérique (36) présente des premières données de secret d'utilisateur, lequel premier objet de données de secret d'utilisateur numérique (36) comprend ce qui suit :
- une première valeur de secret d'utilisateur (37),
- un premier type de secret d'utilisateur (38) et
- une première référence de secret d'utilisateur (39), qui établit une association entre l'objet de données (2) et le premier objet de données de secret d'utilisateur numérique (36) ;
- chiffrer numériquement le premier objet de données numérique de secret d'utilisateur (36) ;
- générer une structure de données numériques (30) attribuée à l'objet de données (2), présentant :
- un conteneur de données de secret d'utilisateur (31) contenant les premiers objets de données numériques de secret d'utilisateur (36) ;
- des données de référence de produit (33), qui indiquent une association entre l'objet de données (2) et le conteneur de données de secret d'utilisateur (31) ; et
- des données de protection d'intégrité (32), qui sont déterminées pour au moins le conteneur de données de secret d'utilisateur (31) et les données de référence de produit (33) et sur la base desquelles l'intégrité des données du conteneur de données de secret d'utilisateur (31) peuvent être vérifiées et; et
- mémoriser la structure de données numériques (30) dans un dispositif de mémorisation de données (3).

2. Procédé selon la revendication 1, **caractérisé en ce que** la fourniture de l'objet de données (2) comprend la fourniture d'un produit de certificat avec un certificat numérique, qui présente une clé publique et avec une clé secrète attribuée à la clé publique dans le cadre d'une infrastructure à clé publique, dans lequel la clé secrète est protégée par le premier secret d'utilisateur.

3. Procédé selon la revendication 1 ou 2, **caractérisé en ce que** le premier objet de données numérique de secret d'utilisateur (31) contient un secret d'utilisateur du groupe suivant : code d'identification personnel, numéro d'identification personnel et clé personnelle.

4. Procédé selon une au moins des revendications précédentes, **caractérisé en ce que** le conteneur de données de secret d'utilisateur (31) est généré en contenant des données d'expiration (34), qui indiquent un critère d'expiration pour une validité du conteneur de données de secret d'utilisateur (31) et/ou du premier objet de données de secret d'utilisateur numérique (36).

5. Procédé selon la revendication 4, **caractérisé en ce que** le critère de processus indique au moins un des critères suivants : nombre autorisé d'appels des conteneurs de données de secret d'utilisateur (31) et/ou le premier objet de données de secret d'utilisateur numérique (36), période d'utilisation autorisée pour les conteneurs de données de secret d'utilisateur (31) et/ou premier objet de données de secret d'utilisateur numérique (36), date d'expiration pour le conteneur de données de secret d'utilisateur (31) et/ou premier objet de données de secret d'utilisateur numérique (36), heure d'expiration du produit de certificat et heure de création de la structure de données numériques (30).

6. Procédé selon une au moins des revendications précédentes, **caractérisé en ce que** la première donnée numérique secrète d'utilisateur (36) est chiffrée avec une clé publique d'un cryptosystème asymétrique et/ou une clé secrète d'un cryptosystème symétrique.

7. Procédé selon une au moins des revendications précédentes, **caractérisé en ce qu'**il est en outre prévu de:
- générer un deuxième objet de données de secret d'utilisateur numérique pour un deuxième secret d'utilisateur, dans lequel le deuxième objet de données de secret d'utilisateur numérique possède des données de deuxième secret d'utilisateur qui sont différentes des premières données de secret d'utilisateur et, pour le deuxième objet de données de secret d'utilisateur numérique, comprennent les éléments suivants :
- une deuxième valeur de secret d'utilisateur,
- un deuxième type de secret d'utilisateur et
- une deuxième référence de secret d'utilisateur indiquant une association entre l'objet de données (2) et le deuxième objet de données de secret d'utilisateur numérique ; et
- chiffrer numériquement le deuxième objet de données de secret d'utilisateur numérique ;
dans lequel la structure de données numériques (30) attribuée à l'objet de données (2) est générée avec un conteneur de données de secret d'utilisateur qui comprend le premier et le deuxième objet de données de secret d'utilisateur numérique crypté.

8. Procédé selon au moins une des revendications précédentes, **caractérisé en ce que** la structure de données numériques (30) est mémorisée dans une zone de mémorisation protégée du dispositif de mémorisation de données (3), dans laquelle un accès à la structure de données numériques (30) est restreint au moyen de l'authentification de l'utilisateur.

9. Procédé selon une au moins des revendications précédentes, **caractérisé en ce que** les données de protection d'intégrité (32) comprennent une ou plusieurs des données suivantes destinées au conteneur de données de secret d'utilisateur (31) : signature numérique, valeur de hachage et code d'authentification de message tel qu'un message de hachage à clé, code d'authentification ou code d'authentification de message basé sur le chiffrement.

10. Procédé selon au moins une des revendications précédentes, dans la mesure où elle se réfère à la revendication 4, **caractérisé en ce que** les données de protection d'intégrité (32) peuvent être déterminées via le conteneur de données de secret d'utilisateur (31) et les dates d'expiration (34).

11. Procédé selon au moins l'une des revendications précédentes, **caractérisé en ce que** l'objet de données (2) est fourni au moyen d'un produit du groupe suivant : carte à puce et fichier d'objets de données cryptographiques tel qu'un

12. Dispositif pour fournir un secret d'utilisateur numérique qui est attribué à un objet de données protégé, comprenant un dispositif de mémoire (3) et un ou plusieurs processeurs qui sont configurés pour ce qui suit :
- fournir un objet de données (2), qui est protégé par un premier secret d'utilisateur ;
- générer un premier objet de données de secret d'utilisateur numérique (36) pour le premier secret d'utilisateur, dans lequel le premier objet de données de secret d'utilisateur numérique (36) présente des premières données de secret d'utilisateur, lequel premier objet de données de secret d'utilisateur numérique (36) comprend ce qui suit :
- une première valeur de secret d'utilisateur (37),
- un premier type de secret d'utilisateur (38) et
- une première référence de secret d'utilisateur (39), qui établit une association entre l'objet de données (2) et le premier objet de données de secret d'utilisateur numérique (36) ;
- chiffrer numériquement le premier objet de données numérique de secret d'utilisateur (36) ;
- générer une structure de données numériques (30) attribuée à l'objet de données (2), présentant :
- un conteneur de données de secret d'utilisateur (31) contenant les premiers objets de données numériques de secret d'utilisateur (36) ;
- des données de référence de produit (33), qui indiquent une association entre l'objet de données (2) et le conteneur de données de secret d'utilisateur (31) ; et
- des données de protection d'intégrité (32), qui sont déterminées pour au moins le conteneur de données de secret d'utilisateur (31) et les données de référence de produit (33) et sur la base desquelles l'intégrité des données du conteneur de données de secret d'utilisateur (31) peuvent être vérifiées et; et
- mémoriser la structure de données numériques (30) dans un dispositif de mémorisation de données (3).
